# EUROPÄISCHE PATENTSCHRIFT

(11) **EP 0 615 240 B1**
(45) Veröffentlichungstag und Bekanntmachung des Hinweises auf die Patenterteilung: **27.05.1998**
(21) Anmeldenummer: 94103092.6
(22) Anmeldetag: 02.03.1994
(51) Int. Cl.: G11B 20/10, G11B 20/12, G11B 20/18, H03M 13/00

(54) **Verfahren zur Speicherung oder Wiedergabe von Datenpaketen**
Method for storing and reproducing data packets
Méthode de stockage ou de restitution de paquets de données

(30) Priorität: 10.03.1993 DE 4308235
(43) Veröffentlichungstag der Anmeldung: 14.09.1994
(73) Patentinhaber: DEUTSCHE THOMSON-BRANDT GMBH, 78048 Villingen-Schwenningen (DE)
(72) Erfinder: Keesen, Heinz-Werner, D-30173 Hannover (DE)
(74) Vertreter: Hartnack, Wolfgang, Dipl.-Ing.

(56) Entgegenhaltungen:
- EP-A- 0 232 093
- EP-A- 0 501 857
- PATENT ABSTRACTS OF JAPAN vol. 012, no. 046 (P-665), 12.Februar 1988 & JP-A-62 192978 (SONY CORP), 24.August 1987,

## Beschreibung

Die Erfindung betrifft ein Verfahren zur Speicherung oder Wiedergabe von Datenpaketen, insbesondere bei einem digitalen Video- oder Datenrecorder.

### Stand der Technik

Übliche Recorder, z.B. DCC-Recorder zur magnetischen Aufzeichnung von digitalen Audio-Daten, zeichnen solche Datenpakete auf, deren Datenformat an das Datenformat des Recorders angepaßt ist. Haben die Datenpakete jedoch ein abweichendes Format, ergeben sich verschiedene Schwierigkeiten, z.B. mit dem Fehlerschutz. In solchen Fällen ist daher auch kein Suchlauf-Mode mit einer zumindest partiellen Auswertung von Datenpaketen vorgesehen.

### Erfindung

Der Erfindung liegt die Aufgabe zugrunde, ein Verfahren zur Aufzeichnung/Wiedergabe von solchen Datenpaketen anzugeben, deren Datenformat nicht mit dem Datenformat der Aufzeichnungs- bzw. Wiedergabevorrichtung übereinstimmt. Diese Aufgabe wird durch das in Anspruch 1 angegebene Verfahren gelöst.

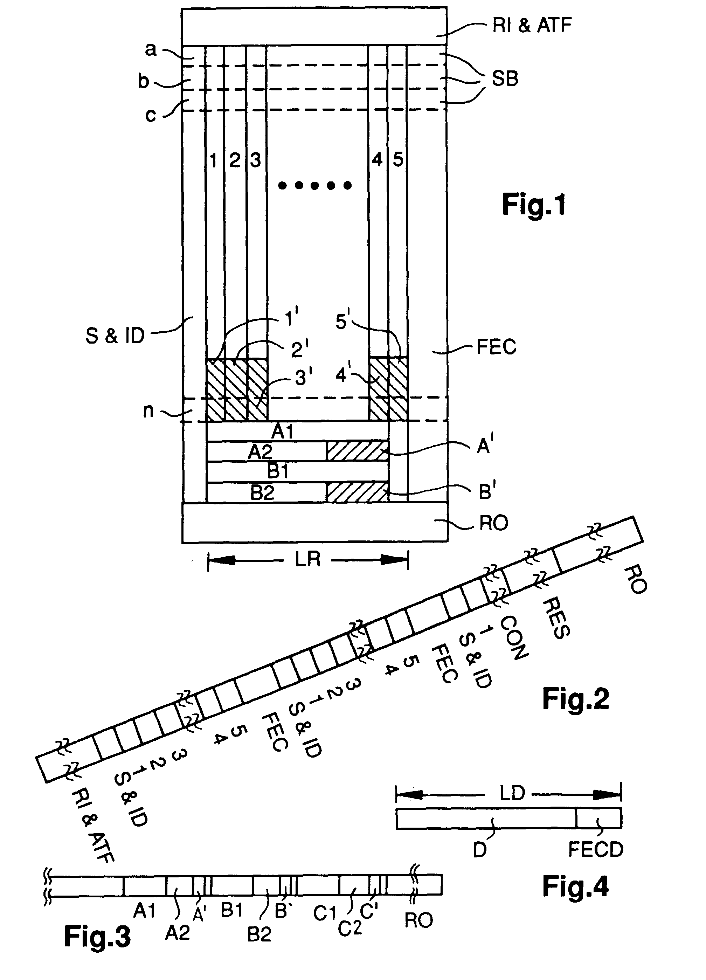

Üblicherweise werden in Video- oder Datenrecordern die Datenpakete in Spurrichtung fortlaufend aufgezeichnet/gespeichert bzw. gelesen. Um die Auswirkung von Fehlern zu beseitigen oder abzumildern, zeichnet die Aufnahmevorrichtung zusätzlich einen Fehlerschutz FEC (Fig. 1) auf. Außerdem können die Daten in einer möglichst unregelmäßigen Weise verwürfelt werden, um den Einfluß von Bandfehlern einzugrenzen.
Im Zuge der Einführung von digitalen Rundfunk-Systemen werden zukünftig jedoch Datenpakete (Fig. 4) mit unterschiedlichen Datenformaten und der jeweiligen Länge LD zu empfangen sein, die außer ihren Nutzdaten D auch einen eigenständigen Fehlerschutz FECD haben. Sollen nun solche Datenpakete auf einem digitalen Recorder aufgezeichnet werden, passen normalerweise die Länge LD und der Fehlerschutz FECD der Datenpakete nicht zu der Paketlänge LR und dem Fehlerschutz FEC des Recorders bzw. der Speichereinrichtung.
Erfindungsgemäß werden darum die Datenpakete vor der Aufzeichnung/Speicherung entsprechend Fig. 1 'quer' angeordnet, d.h. es wird nicht jedes Datenpaket 1, 2, 3, 4, 5 fortlaufend aufgezeichnet/gespeichert (in vertikaler Richtung in Fig. 1), sondern es wird fortlaufend der erste Abschnitt a der Datenpakete einer Gruppe 1...5 von Datenpaketen aufgezeichnet (in horizontaler Richtung in Fig. 1). Anschließend wird jeweils der zweite Abschnitt b dieser Datenpakete aufgezeichnet, dann der dritte c, usw.. Vor und/oder nach der Gruppe der ersten Abschnitte kann z.B. Sync- und/oder Ident-Information S&ID angeordnet werden. Vor und/oder nach der Gruppe der ersten Abschnitte wird der interne Fehlerschutz FEC der Aufzeichnungs/Speicherungs-Vorrichtung angeordnet. Eine Gruppe dieser Abschnitte bildet jeweils zusammen mit der zugehörigen Sync und/oder Ident-Information und dem Fehlerschutz FEC einen Sync-Block SB.
Die Abschnitte mit dem Datenpaket-eigenen Fehlerschutz 1', 2', 3', 4', 5' werden zusammenhängend in entsprechenden Sync-Blöcken vor und/oder nach den Sync-Blöcken mit den Nutzdaten D aufgezeichnet/gespeichert. Dadurch ist eine zweidimensionale Fehlerkorrektur bzw. -Ermittlung möglich. Sowohl der Fehlerschutz FEC der Aufzeichnungs/Speicherungs-Vorrichtung als auch der Fehlerschutz FECD der Datenpakete 1...5 können optimal ausgenutzt werden.

Beim schnellen Suchlauf eines digitalen Recorders können die Schrägspuren aber nur abschnittsweise gelesen werden. Von den gemäß Fig. 1 quer angeordneten Datenpaketen 1...5 würden nur Rudimente erfaßt, die für die Wiedergabe nicht sinnvoll decodiert werden können. Es hat sich gezeigt, daß bei der Aufzeichnung in einem Digital-Recorder noch Kapazitätsreserven vorhanden sind, z.B. durch nicht voll ausgenutzte Bandflächen oder die Möglichkeit der Tiefen-Aufzeichnung.
Erfindungsgemäß werden nun in solchen, bei einem Suchlauf zusammenhängend lesbaren Reserve-Abschnitten Datenpakete mit oder ohne eigenen Fehlerschutz zusätzlich aufgezeichnet. Die zugehörigen Nutzdaten sind normalerweise teilweise Kopien von den bereits auf 'normale' Weise aufgezeichneten Daten. Beim Suchlauf mit erhöhter Geschwindigkeit werden dann diese Reserve-Sync-Blöcke - oder zumindest einige von ihnen - ausgewertet.

Im Prinzip hat das erfindungsgemäße Verfahren zur Speicherung oder Wiedergabe von Datenpaketen - insbesondere bei einem digitalen Video- oder Datenrecorder - folgende Merkmale:
- die Länge der zu speichernden Datenpakete ist größer als die für eine sequentielle Speicherung/Wiedergabe von Datenpaketen zur Verfügung stehende Länge;
- es wird jeweils eine Gruppe von zu speichernden Datenpaketen gebildet, innerhalb der jeweils entsprechende kleine Abschnitte der einzelnen Datenpakete sequentiell gespeichert/gelesen werden, beginnend mit dem ersten Abschnitt für jedes Datenpaket, so daß in gleichmäßigen Abständen die Abschnitte jedes einzelnen der Datenpakete im Datenstrom erscheinen;
- zu jeder entsprechenden Gruppe von gleichpositionierten Abschnitten gehört ein der Speicherung/Wiedergabe zugeordneter Fehlerschutz;
- die Abschnitte mit einem den Datenpaketen zugehörigen Fehlerschutz werden ohne Einfügung von Nutzdaten der Datenpakete aufgezeichnet/wiedergegeben.

Vorteilhafte Weiterbildungen des erfindungsgemäßen Verfahrens, insbesondere die Möglichkeit zum Suchlauf-Mode, ergeben sich aus den zugehörigen abhängigen Ansprüchen.

### Zeichnungen

Anhand der Zeichnungen sind Ausführungs-Beispiele der Erfindung beschrieben. Diese zeigen in:
- Fig. 1: Anordnung der aufzuzeichnenden Daten in zweidimensionaler Darstellung;
- Fig. 2: Reihenfolge der Daten in einer Schrägspur;
- Fig. 3: Reihenfolge der Suchlauf-Zusatz-Daten in der Schrägspur;
- Fig. 4: aufzuzeichnendes Datenpaket mit zugehörigem quellseitigen Fehlerschutz.

### Ausführungs-Beispiele

Die Daten in der Darstellung nach Fig. 1 werden zeilenweise (horizontal) gespeichert bzw. gelesen. Die tatsächliche Anordnung dieser Daten in einer Schrägspur eines digitalen Recorders zeigt Fig. 2.
Die Schrägspur beginnt mit Run-In- und ATF-Daten (automatic track following) RI&ATF zur Steuerung eines Servos. Es folgen die zum Sync-Block a gehörenden Daten:
- Sync- und ID-Information S&ID
   Die Sync-Information erlaubt die Detektion des Sync-Block-Beginns anhand eines speziellen Datenworts. Die ID-Information enthält z.B. die fortlaufende Nummer des Sync-Blocks SB.
- erster Abschnitt des ersten Datenpakets 1 (entsprechend Fig. 4)
- erster Abschnitt des zweiten Datenpakets 2
   .
   .
   .
- erster Abschnitt des letzten Datenpakets 5 in dieser Schrägspur. Diese Abschnitte können z.B. jeweils ein Byte umfassen.
- recorder-eigener Fehlerschutz FEC
   Dieser Fehlerschutz ist beispielsweise eine Forward Error Correction mit eine Reed-Solomon-Code.

Anschließend folgen die entsprechenden Daten der Syncblöcke b, c, ... . In einer Schrägspur sind z.B. 200 solcher Sync-Blöcke mit z.B. jeweils 90 Byte angeordnet.

Danach folgen Sync-Blöcke, die den zu den Datenpaketen 1...5 gehörenden Datenpaket-eigenen Fehlerschutz 1', 2', ..., 5' enthalten und die in Fig. 2 im Bereich CON angeordnet sind.

Es kann sich ein Bereich RES anschließen, der die obengenannten Kapazitätsreserven enthält.
Zum Schluß der Schrägspur folgen noch Run-Out-Daten RO.

Durch die spezielle Anordnung der Datenpakete nach Fig. 4 innerhalb des Recorder-Datenformats erscheinen die zu einem Datenpaket gehörenden Daten-Abschnitte in *regelmäßigen* Abständen auf der Schrägspur. Um die Datenpakete so aufzuteilen oder wieder zusammenzustellen, ist nur eine relativ einfache Hardware erforderlich. Die Datenpakete haben z.B. eine Länge LD von 148 Byte. Vorteilhaft ist auch der doppelte, zweidimensionale Fehlerschutz durch FEC und FECD, der jeweils optimal genutzt werden kann. Beispielsweise kann durch FEC der Ort eines Fehlers ermittelt werden und durch FECD dieser Fehler dann korrigiert werden.

Für einen Suchlauf-Mode werden z.B. im Bereich RES in Fig. 2 bzw. in Fig. 1 zwischen den Run-In- und ATF-Daten RI&ATF, der Sync- und ID-Information S&ID, dem recorder-eigenen Fehlerschutz FEC und den Run-Out-Daten RO die Suchlauf-Datenpakete angeordnet, und zwar neben den Datenpaketen 1...5 mit ihrem Fehlerschutz 1'...5' oder auch als Tiefenmodulation unter diesen Datenpaketen.
Der Bereich RES aus Fig. 2 ist in Fig. 3 detaillierter dargestellt und enthält die Anteile A1, A2, A', B1, B2, B', C1, C2, C' der Suchlauf-Datenpakete, wobei A', B' und C' den zugehörigen, paketeigenen Fehlerschutz darstellen.
Je nach Suchlauf-Geschwindigkeit (z.B. bis Faktor 20) können z.B. bis zu sechs solcher Zusatz-Datenpakete erfaßt und ausgewertet werden.

Bei der Übertragung eines digitalen TV/HDTV Fernsehsignals kann z.B. die gesamte Bildinformation aufgeteilt werden in HP-Information (High Priority) und SP-Information (Standard Priority), wobei die HP-Information einer Bandbreite von 4 MHz entspricht.

Die HP-Information enthält dann die codierten Daten für Fernsehbilder mit TV-Auflösung. Die SP-Information enthält dann codierte Zusatzdaten zur Bildung von Fernsehbildern mit HDTV-Auflösung.
Bei der Speicherung bzw. Wiedergabe gemäß der Erfindung ist nun die SP-Information und die HP-Information in den Datenpaketen 1...5 enthalten. Die HP-Information ist (teilweise) auch in den Datenpaketen A1, A2, ..., C1, C2 enthalten. Beim Suchlauf von aufgezeichneten HDTV-Signalen können dann Fernsehbilder in TV-Auflösung wiedergegeben werden.

Die Erfindung kann bei der magnetischen oder optischen Aufzeichnung/Speicherung/Wiedergabe für Video-, Audio- und/oder sonstige Daten eingesetzt werden.

## Patentansprüche

1. Verfahren zur Speicherung oder Wiedergabe von Datenpaketen - insbesondere bei einem digitalen Video- oder Datenrecorder -, **gekennzeichnet** durch:
- die Länge (LD) der zu speichernden Datenpakete ist größer als die für eine sequentielle Speicherung/Wiedergabe von Datenpaketen zur Verfügung stehende Länge (LR);
- es wird jeweils eine Gruppe (a, b, c, ..., n) von zu speichernden Datenpaketen (1, 2, 3, 4, 5) gebildet, innerhalb der jeweils entsprechende kleine Abschnitte der einzelnen Datenpakete sequentiell gespeichert/gelesen werden, beginnend mit dem ersten Abschnitt (a) für jedes Datenpaket, so daß in gleichmäßigen Abständen die Abschnitte jedes einzelnen der Datenpakete im Datenstrom erscheinen;
- zu jeder entsprechenden Gruppe von gleichpositionierten Abschnitten gehört ein der Speicherung/Wiedergabe zugeordneter Fehlerschutz (FEC);
- die Abschnitte mit einem den Datenpaketen zugehörigen Fehlerschutz (FECD, 1', 2', 3', 4', 5') werden ohne Einfügung von Nutzdaten (D) der Datenpakete aufgezeichnet/wiedergegeben.

2. Verfahren nach Anspruch 1, **dadurch gekennzeichnet,** daß zusätzlich bei einem Suchlauf lesbare Datenpakete (A1, A2; B1, B2) gespeichert/gelesen werden, die sequentiell kontinuierlich angeordnet sind.

3. Verfahren nach Anspruch 2, **dadurch gekennzeichnet,** daß die im Suchlauf lesbaren Datenpakete Kopien von einzelnen der anderen Datenpakete sind.

4. Verfahren nach Anspruch 2 oder 3, **dadurch gekennzeichnet,** daß die beim Suchlauf lesbaren Datenpakete (A1, A2; B1, B2), bezogen auf eine zweidimensionale Darstellung (Fig. 1), neben den anderen Datenpaketen (1...5) mit ihrem Fehlerschutz (1'...5') angeordnet sind oder als Tiefenmodulation unter diesen Datenpaketen.

5. Verfahren nach einem oder mehreren der Ansprüche 1 bis 4, **dadurch gekennzeichnet,** daß der der Speicherung/Wiedergabe zugeordnete Fehlerschutz (FEC) und der den Datenpaketen zugehörige Fehlerschutz (FECD, 1', 2', 3', 4', 5') ausgenutzt wird.

6. Verfahren nach einem oder mehreren der Ansprüche 1 bis 5, **dadurch gekennzeichnet,** daß jeweils eine Gruppe (a, b, c, ..., n) von zu speichernden Datenpaketen (1, 2, 3, 4, 5) und , falls vorhanden, die zugehörigen, bei einem Suchlauf lesbaren Datenpakete (A1, A2; B1, B2) in einer Schrägspur eines Recorders angeordnet sind.

7. Verfahren nach einem oder mehreren der Ansprüche 2 bis 6, **dadurch gekennzeichnet**, daß in den beim Suchlauf lesbaren Datenpaketen (A1, A2; B1, B2) Code für Fernsehbilder in TV-Auflösung und in den anderen Datenpaketen (1, 2, 3, 4, 5) im wesentlichen Code für Fernsehbilder in HDTV-Auflösung enthalten ist.

## Claims

1. A method of storing or playing back data packets - in particular in a digital video- or data recorder - characterised in that
- the length (LD) of the data packets to be stored is greater than the length (LR) available for a sequential storage/playback of data packets;
- a group (a, b, c, ..., n) of data packets (1, 2, 3, 4, 5) to be stored is in each case formed, within which group corresponding, small sections of the individual data packets are in each case sequentially stored/read, commencing with the first section (a) for each data packet, so that the sections of each individual one of the data packets appear in the data stream at regular intervals;
- each corresponding group of identically positioned sections is allocated an error protection (FEC) assigned to the storage/playback;
- the sections with error protection (FECD, 1', 2', 3', 4', 5') assigned to the data packets are recorded/played back without the insertion of useful data (D) of the data packets.

2. A method according to Claim 1, characterised in that additionally data packets (Al, A2; B1, B2) readable in a search run are stored/read, which data packets are arranged sequentially in continuous fashion.

3. A method according to Claim 2, characterised in that the data packets readable in the search run are copies of individual ones of the other data packets.

4. A method according to Claim 2 or 3, characterised in that in a two-dimensional display (Figure 1) the data packets (Al, A2; B1, B2) readable in the search run are arranged next to the other data packets (1 ... 5) with error protection (1' ... 5') or, as low-level modulation, below these data packets.

5. A method according to one or more of Claims 1 to 4, characterised in that the error protection (FEC) assigned to the storage/playback and the error protection (FECD, 1', 2', 3', 4', 5') assigned to the data packets is fully utilized.

6. A method according to one or more of Claims 1 to 5, characterised in that a group (a, b, c, ..., n) of data packets (1, 2, 3, 4, 5) to be stored and, if present, the associated data packets (A1, A2; B1, B2) readable in a search run are in each case arranged in an oblique track of a recorder.

7. A method according to one or more of Claims 2 to 6, characterised in that a code for television pictures with TV definition is contained in the data packets (A1, A2; B1, B2) readable in the search run and substantially a code for television pictures with HDTV definition is contained in the other data packets (1, 2, 3, 4, 5).

## Revendications

1. Méthode de stockage ou de restitution de paquets de données, notamment avec un magnétoscope ou enregistreur de données numériques, **caractérisée en ce que :**
• la longueur (LD) des paquets de données à stocker est supérieure à la longueur (LR) disponible pour un stockage/restitution séquentiels des paquets de données ;
• un groupe (a, b, c, ..., n) de paquets de données à stocker (1, 2, 3, 4, 5) est à chaque fois constitué, à l'intérieur duquel des segments proportionnellement plus petits des différents paquets de données sont stockés/lus sous forme séquentielle, à commencer par le premier segment (a) de chaque paquet de données, de manière à ce que les segments de chaque paquet de données individuel apparaissent à intervalle régulier dans le flux de données ;
• chaque groupe correspondant de segments ayant un positionnement identique comprend une protection contre les erreurs affectée au stockage/restitution.
• les segments avec une protection contre les erreurs appartenant aux paquets de données (FECD, 1', 2', 3', 4', 5') sont enregistrés/restitués sans insertion de données utiles (D) des paquets de données.

2. Procédé selon la revendication 1, **caractérisé en ce que** des paquets de données (A1, A2 ; B1, B2) pouvant être lus à titre complémentaire lors d'une recherche et agencés de manière séquentielle continue sont stockés/lus.

3. Procédé selon la revendication 2, **caractérisé en ce que** les paquets de données pouvant être lus lors de la recherche représentent des copies de certains des autres paquets de données.

4. Procédé selon la revendication 2 ou 3, **caractérisé en ce que** les paquets de données (A1, A2 ; B1, B2) pouvant être lus lors de la recherche sont disposés, dans la perspective d'une représentation bidimensionnelle (figure 1), à côté des autres paquets de données (1 à 5) avec leur protection contre les erreurs (1' à 5'), ou en guise de modulation en profondeur, sous ces paquets de données.

5. Procédé selon l'une ou plusieurs des revendications 1 à 4, **caractérisé en ce que** la protection contre les erreurs (FEC) affectée au stockage/restitution et la protection contre les erreurs (FECD, 1', 2', 3', 4', 5') afférente au paquet de données sont utilisées.

6. Procédé selon l'une ou plusieurs des revendications 1 à 5, **caractérisé en ce que** respectivement un groupe (a, b, c n) de paquets de données à stocker (1, 2, 3, 4, 5) et, s'ils existent, les paquets de données (A1, A2 ; B1, B2) pouvant être lus lors de la recherche, sont agencés sur la piste transversale d'un enregistreur.

7. Procédé selon l'une ou plusieurs des revendications 2 à 6, **caractérisé en ce que** les paquets de données (A1, A2 ; B1, B2) pouvant être lus lors de la recherche contiennent un code destiné aux images télévisées en résolution TV et en ce que les autres paquets de données (1, 2, 3, 4, 5) contiennent pour l'essentiel un code pour des images télévisées en résolution TVHD.
